# EUROPEAN PATENT APPLICATION

(11) **EP 3 396 610 A1**
(43) Date of publication of application: **31.10.2018**
(21) Application number: 18168701.3
(22) Date of filing: 23.04.2018
(51) Int. Cl.: G06Q 20/20, G07G 3/00, G06Q 20/18

(54) **COMMODITY INFORMATION READING DEVICE AND COMMODITY INFORMATION READING METHOD**

(30) Priority: 24.04.2017 JP 2017085065
(71) Applicant: Toshiba TEC Kabushiki Kaisha, Tokyo 141-8562 (JP)
(72) Inventor: Naito, Hidehiro, Tokyo, 141-8562 (JP)
(74) Representative: Hoffmann Eitle

(57) **Abstract**

A commodity information reading device includes an imaging device, a display device, and a controller configured to acquire an image of a commodity from an imaging device, calculate feature data of the commodity from the image, calculate a similarity value for the commodity using the calculated feature data and pre-registered feature data for a plurality of pre-registered commodities, cause commodity information of each pre-registered commodity that has a similarity value higher than a predetermined threshold value to be displayed as one candidate commodity in a plurality of candidate commodities on the display device, receive a selection designating one of the plurality of candidate commodities as a purchased commodity, and issue an alert when the designated candidate commodity does not have the highest similarity value from among the plurality of candidate commodities.

## Description

### CROSS-REFERENCE TO RELATED APPLICATION

This application is based upon and claims the benefit of priority from Japanese Patent Application No. 2017-085065, filed April 24, 2017, the entire contents of which are incorporated herein by reference.

### FIELD

Embodiments described herein relate generally to a commodity information reading device, and a commodity information reading method.

### BACKGROUND

In an existing self-service checkout device, a customer carries out sales registration processing. The self-service checkout device includes a commodity identifying device for identifying a commodity being purchased. In general, the commodity identifying device can be a barcode scanner that reads a barcode label on the commodity or a camera that captures an image or images of the commodity for visual recognition purposes. Accuracy in visual recognition of commodities based on captured images has increased in recent years. However, there may still scenarios in which a particular instance of a commodity cannot be sufficiently recognized in an image due commodity position or lighting variations. In such cases, candidate matches for the commodity can be displayed on a display device so that the customer can decide which candidate matches the commodity being purchased and then select the candidate that matches the commodity.

However, in some cases, the customer may misidentify the commodity and make a selection from among the candidate matches that is different from the actual commodity being purchased. Such misidentification may be on purpose or simply due to innocent error. When the identification selection is different from the actual commodity, there is a concern that a price different from that of actually purchased commodity may be applied, and that this may lead to a failure in commodity inventory management.

The same is true when a sales person operating a point-of-sales (POS) terminal device connected to the commodity identification device selects a commodity different from an actual commodity among the displayed candidate commodities. In such cases, a price different from that of actually purchased commodity may be applied, and that this may lead to a failure in commodity inventory management.

### SUMMARY

One of the objects of the present invention is to improve prior art techniques and overcome at least some of the prior art problems as for instance above illustrated.

According to a first aspect of the present invention, it is provided a commodity information reading device, comprising: an imaging device; a display device; and
a controller configured to:
acquire an image of a commodity from an imaging device;
calculate feature data of the commodity from the image;
calculate a similarity value for the commodity using the calculated feature data and pre-registered feature data for a plurality of pre-registered commodities;
cause commodity information of each pre-registered commodity that has a similarity value higher than a predetermined threshold value to be displayed as one candidate commodity in a plurality of candidate commodities on the display device;
receive a selection designating one of the plurality of candidate commodities as a purchased commodity; and
issue an alert when the designated candidate commodity does not have the highest similarity value from among the plurality of candidate commodities.

Optionally, in the device according to the first aspect, the selection designating one of the plurality of candidate commodities as the purchased commodity is received from a user input unit.

Optionally, in the device according to the first aspect, if only one pre-registered commodity has a similarity value higher than the predetermined threshold value, the controller automatically designates the one pre-registered commodity as the purchased commodity.

Optionally, in the device according to the first aspect, the controller is further configured to issue an alert when the designated candidate commodity has a lowest price from among the plurality of candidate commodities.

Optionally, in the device according to the first aspect, the controller is further configured to: cause the designated candidate commodity to be displayed in a list on the display device; and cause a mark to be displayed in vicinity of the designated candidate commodity in the list on the display device.

Optionally, in the device according to the first aspect, the controller is further configured to issue an alert to an external terminal device connected to commodity information reading device.

Optionally, in the device according to the first aspect, when none of the pre-registered commodities have a similarity value higher than the pre-determined threshold value, the controller causes the pre-registered commodity with the highest similarity value among the plurality of pre-registered commodities to be displayed on the display device.

According to a second aspect of the present invention, it is provided a self-service checkout Point-of-Sale (POS) terminal comprising: an imaging device to capture an image of a commodity; a display device; a touch panel; and a controller configured to:
acquire an image of a commodity from the imaging device;
calculate feature data of the commodity from the image;
calculate a similarity value for the commodity using the calculated feature data and pre-registered feature data for a plurality of pre-registered commodities;
cause commodity information of each pre-registered commodity that has a similarity value higher than a predetermined threshold value to be displayed as one candidate commodity in a plurality of candidate commodities on a display device;
receive a selection designating one of the plurality of candidate commodities as a purchased commodity; and
issue an alert when the designated candidate commodity does not have the highest similarity value from among the plurality of candidate commodities.

Optionally, the self-service checkout Point-of-Sale (POS) terminal according to the second aspect, wherein the selection designating one of the plurality of candidate commodities as the purchased commodity is received from a user input unit.

Optionally, in the self-service checkout Point-of-Sale (POS) terminal according to the second aspect, if only one pre-registered commodity has a similarity value higher than the predetermined threshold value, the controller automatically designates the one pre-registered commodity as the purchased commodity.

Optionally, in the self-service checkout Point-of-Sale (POS) terminal according to the second aspect, the controller is further configured to issue an alert when the designated candidate commodity has a lowest price from among the plurality of candidate commodities.

Optionally, in the self-service checkout Point-of-Sale (POS) terminal according to the second aspect, the controller is further configured to:
cause the designated candidate commodity to be displayed in a list on the display device; and
a mark to be displayed in vicinity of the designated candidate commodity in the list on the display device.

Optionally, in the self-service checkout Point-of-Sale (POS) terminal according to the second aspect, the controller is further configured to issue an alert to an external terminal device connected to commodity information reading device.

Optionally, in the self-service checkout Point-of-Sale (POS) terminal according to the second aspect, when none of the pre-registered commodities have a similarity value higher than the pre-determined threshold value, the controller causes the pre-registered commodity with the highest similarity value among the plurality of pre-registered commodities to be displayed on the display device.

According to a third aspect of the present invention, it is provided a commodity information reading method comprising:
acquiring an image of a commodity from an imaging device;
calculating feature data of the commodity from the image
calculating a similarity value for the commodity using the calculated feature data and pre-registered feature data for a plurality of pre-registered commodities;
causing commodity information of each pre-registered commodity that has a similarity value higher than a predetermined threshold value to be displayed as one candidate commodity in a plurality of candidate commodities on a display device ;
receiving a selection designating one of the plurality of candidate commodities as a purchased commodity; and
issuing an alert when the designated candidate commodity does not have the highest similarity value from among the plurality of candidate commodities.

Optionally, in the commodity information reading method according to the third aspect, the selection designating one of the plurality of candidate commodities as the purchased commodity is received from a user input unit.

Optionally, the commodity information reading method according to the third aspect further comprises:
when only one pre-registered commodity has a similarity value higher than the predetermined threshold value, automatically designating the one pre-registered commodity as the purchased commodity.

Optionally, the commodity information reading method according to the third aspect, further comprises:
issuing an alert when the designated candidate commodity has a lowest price from among the plurality of candidate commodities.

Optionally, the commodity information reading method according to the third aspect further comprises:
displaying the designated candidate commodity in a list on the display device; and
displaying a mark in vicinity of the designated candidate commodity in the list on the display device.

Optionally, the commodity information reading method according to the third aspect further comprises:
issuing an alert to an external terminal device connected to commodity information reading device.

### DESCRIPTION OF THE DRAWINGS

FIG. 1 is a perspective view of a self-service checkout POS according to an embodiment.
FIG. 2 is a block diagram of a configuration of a self-service checkout POS.
FIG. 3 is a block diagram of a functional configuration of a self-service checkout POS.
FIG. 4 depicts an example of a candidate selecting screen.
FIG. 5 depicts an example list of a registration screen.
FIG. 6 depicts an example alert screen displayed on a display of a store server.
FIG. 7 depicts example alerts displayed on ae registration screen.
FIG. 8 is a flowchart of an example flow of misregistration informing processing by a control unit.
FIG. 9 depicts another example alert on a display of a self-service checkout POS.

### DETAILED DESCRIPTION

In general, according to an embodiment, there is provided a commodity information reading device which includes an imaging device, a display device, and a controller configured to acquire an image of a commodity from an imaging device, calculate feature data of the commodity from the image, calculate a similarity value for the commodity using the calculated feature data and pre-registered feature data for a plurality of pre-registered commodities, cause commodity information of each pre-registered commodity that has a similarity value higher than a predetermined threshold value to be displayed as one candidate commodity in a plurality of candidate commodities on the display device, receive a selection designating one of the plurality of candidate commodities as a purchased commodity, and issue an alert when the designated candidate commodity does not have the highest similarity value from among the plurality of candidate commodities.

### First Embodiment

In the example embodiment described hereinafter, a commodity information reading device provided in a self-service checkout device (hereinafter, referred to as a self-service checkout POS) is used in a store such as a supermarket. It should be noted that the particular commodity information reading devices described below are some possible examples of a commodity information reading device and do not limit the present disclosure. For example, a commodity information reading device may be connected to a sales data processing device, such as a POS terminal device, which is operated by a sales person.

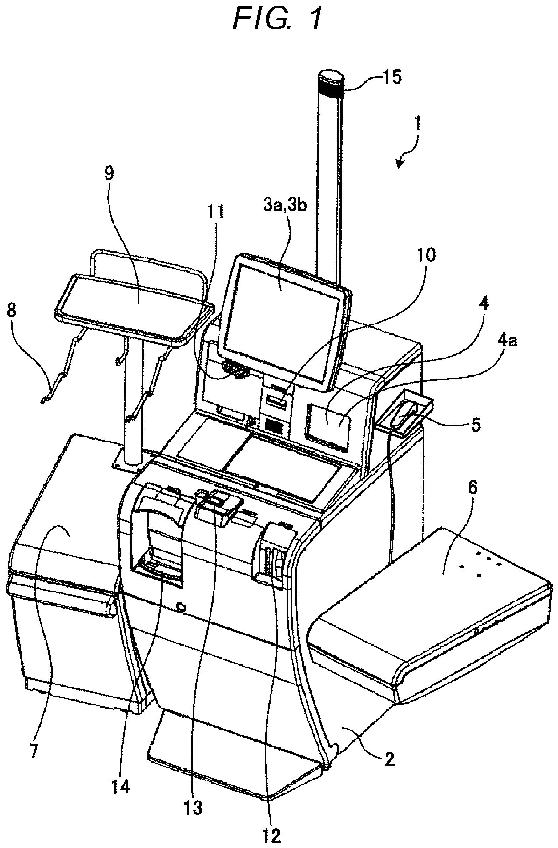

FIG. 1 is an external perspective view of a self-service checkout POS 1. A main body 2 of the self-service checkout POS 1 is provided with a display 3b that includes a touch panel 3a arranged on the surface, a scanner 4, and a hand scanner 5.

The display 3b is an example of a predetermined display device and, for example, a liquid crystal display. The display 3b displays a guide screen, an input screen, a registration screen, a settlement screen, or the like. The guide screen informs a customer of an operation method of the self-service checkout POS 1. The input screen receives an input of commodity information of a commodity to which a code symbol is not attached. The registration screen displays commodity information of a commodity which is registered as purchased commodity. The settlement screen displays a total amount due, tendered amount, change due, or the like, and receives a selection of terms of payment.

The scanner 4 includes a reading window 4a on a front face of the main body 2, and an imaging unit which is built in at a position corresponding to a depth side of the reading window 4a in the inside of the main body 2. The imaging unit captures an image of an appearance of a commodity which is put up on the reading window 4a. The self-service checkout POS 1 obtains commodity information such as a price, based on the captured image.

The hand scanner 5 is used for optically reading a code symbol such as a barcode, a two-dimensional code, or the like attached to a commodity which cannot easily be placed up in a fixed scanner 4 (for example, a large commodity or the like) . The code symbol such as a barcode specifies a commodity code, or the like of a commodity to which the code symbol is attached.

The self-service checkout POS 1 includes commodity tables 6 and 7. The commodity table 6 is a table on a right side of the main body 2 for placing an unsettled commodity in a basket. The commodity table 7 is a table on a left side of the main body 2 for placing a settled commodity. On the commodity table 7, a hook for hanging bag 8 for bagging a settled commodity, or a temporary placing table 9 for temporarily placing a settled commodity before bagging is provided. The commodity placing tables 6 and 7 include a scale for checking whether or not a weight of a commodity is the same before and after settling.

The main body 2 further includes a card insertion slot 10, a receipt issuing port 11, a bill input-output port 12, a coin inlet 13, a coin outlet 14, or the like. The card insertion slot 10 receives an insertion of a customer reward card or a credit card to be read by a card reader on the depth side of the card insertion slot 10. The receipt issuing port 11 issues a receipt which is printed by a printer on the depth side of the receipt issuing port 11. The bill input-output port 12 is an opening portion for receiving and paying of a bill by a bill input-output unit provided in the main body 2. The coin inlet 13 is an opening portion for receiving coin by a coin input-output unit provided inside the main body 2. The coin outlet 14 is an opening portion for paying a coin to the outside of the main body 2 by the coin input-output unit.

In addition, the main body 2 includes a pole on a top face, and a warning lamp 15 at a top portion of the pole. The warning lamp 15 is turned on for calling a sales person or the like when there is abnormality in operation in the self-service checkout POS 1.

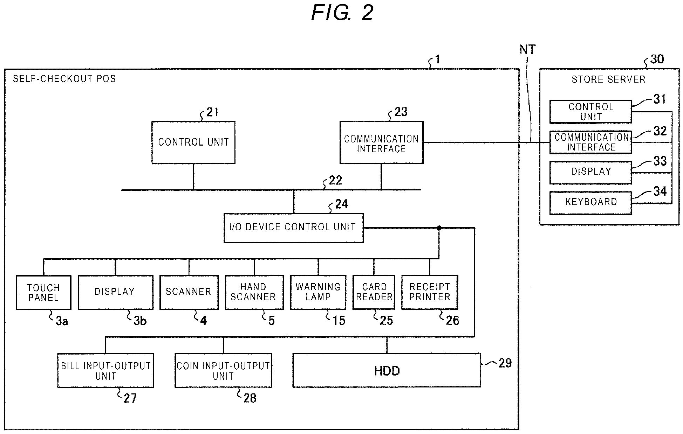

FIG. 2 is a block diagram of a configuration of the self-service checkout POS 1. The self-service checkout POS 1 includes a control unit 21, a bus 22, a communication I/F (interface) 23, an input/output (I/O) device control unit 24, a card reader 25, a printer 26, the bill input-output unit 27, the coin input-output unit 28, and a hard disk drive (HDD) 29.

The HDD 29 stores various programs and various data such as a PLU file which are executed by a CPU in a rewritable manner. The HDD 29 is an example of a storage unit and the PLU file is an example of commodity information which includes a price. As the above described program, for example, there is a program for performing commodity sales registration processing, or object recognizing processing.

The PLU file is a file which stores commodity information of each commodity. A commodity code as a unique value of each commodity, or information related to an appearance of a commodity (referred to as appearance information) such as feature data which is used when recognizing an object is included in the commodity information. The PLU file is delivered and updated by the store server 30, and is stored in the HDD 29 of the self-service checkout POS 1. The examples described above are some possible examples of commodity information processing and do not limit other commodity information processing. For example, the store server 30 may store the PLU file and the control unit 21 may use commodity information by accessing the PLU file of the store server 30 through a network NT.

The control unit 21 has a computer configuration having a central processing unit (CPU), a read only memory (ROM) as a storage unit, a random access memory (RAM), and the like. The ROM stores various programs which are executed by the CPU, or various data. The RAM temporarily stores the data or the program when the CPU executes the various programs. The data stored in the RAM is for example, sales data which denotes a sales record of a commodity, or various screen display data which are displayed on the display 3b.

The control unit 21 controls the touch panel 3a, the display 3b, the scanner 4, the hand scanner 5, the warning lamp 15, the card reader 25, the printer 26, the bill input-output unit 27, the coin input-output unit 28, and an I/O device such as the HDD 29 through the bus 22 and an I/O device control unit 24, and controls the entire system of the self-service checkout POS 1.

The card reader 25 reads information of a customer reward card or a credit card which is inserted from the card insertion slot 10. The printer 26 prints a receipt after sales transaction, and issues the receipt from the receipt issuing port 11.

The bill input-output unit 27 treats a bill which is input or output from the bill input-output port 12. In addition, the coin input-output unit 28 treats a coin input from the coin inlet 13 and a coin paid to the coin outlet 14.

The control unit 21 and the store server 30 can communicate with each other using the network NT such as a local area network (LAN) through a communication interface 23 or attendant sales person terminal (not specifically depicted) for a sales person who supports self-service checkout sales transaction. The store server 30 generally performs a management of commodity sales registration processing, or the like, which is performed in one or more the self-service checkout POS 1 in a store.

The store server 30 is a device which has a computer configuration having a control unit 31 including a CPU, a ROM, and a RAM, and a communication interface 32, a display 33, and an input device such as a keyboard 34. The control unit 31 performs a data communication with the self-service checkout POS 1 through the communication interface 32, and the network NT.

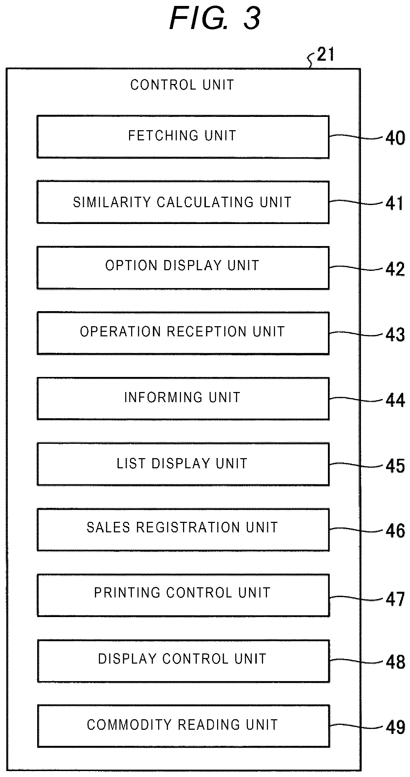

FIG. 3 is a block diagram of a functional configuration of the self-service checkout POS 1. The control unit 21 of the self-service checkout POS 1 functions as a fetching unit 40, a similarity calculating unit 41, an option display unit 42, an operation reception unit 43, an informing unit 44, a list display unit 45, a sales registration unit 46, a printing control unit 47, a display control unit 48, and a commodity reading unit 49, by executing the program according to the embodiment which is stored in the ROM, by developing the program in the RAM.

The display control unit 48 controls display processing in the display 3b through the I/O device control unit 24, and causes various screens to be displayed. The printing control unit 47 controls printing of a receipt using the printer 26, through the I/O device control unit 24.

The fetching unit 40 obtains an image captured by an imaging unit of the scanner 4.

The commodity reading unit 49 determines whether or not a code symbol such as a barcode is included in the captured image obtained by the fetching unit 40, and when the code symbol is included, the commodity reading unit obtains commodity information which matches a value derived from the code symbol (including a commodity code or the like) from the PLU file.

When the hand scanner 5 reads a code symbol such as a barcode, the commodity reading unit 49 obtains commodity information which matches a value derived from the code symbol (including a commodity code or the like) from the PLU file.

The similarity calculating unit 41 firstly calculates feature data of a commodity in the image captured by the fetching unit 40, and secondly calculates similarity between the calculated feature data and feature data of each pre-registered commodity stored in the PLU file.

The feature data is, for example, a color of the surface, a pattern, a state of unevenness, or the like. The similarity calculating unit 41 obtains feature data from a captured image by object recognition. The similarity calculating unit 41 compares feature data of the captured image with pre-registered feature data of each commodity recorded in the PLU file and pre-registered commodity having a high similarity (referred to as a degree of matching) with the commodity in the captured image.

When there is commodity having a similarity higher than a predetermined threshold value, the similarity calculating unit 41 determines that the commodity put up on the reading window 4a is the commodity having the pre-registered feature, and outputs the commodity information as single candidate commodity.

When there is no commodity having a similarity higher than a predetermined threshold value, the similarity calculating unit 41 selects a plurality of commodity information in the order of high similarity and outputs thereof as candidate commodities. When there is no commodity having a similarity a predetermined lower threshold, the similarity calculating unit 41 outputs a message indicating that there is no candidate commodity.

When the similarity calculating unit 41 outputs single candidate commodity, the option display unit 42 displays the single candidate commodity on the display 3b.

When there is a plurality of candidate commodities output from the similarity calculating unit 41, the option display unit 42 causes the candidate commodity to be displayed on the display 3b in the order of high similarity to the commodity which is put up on the reading window 4a.

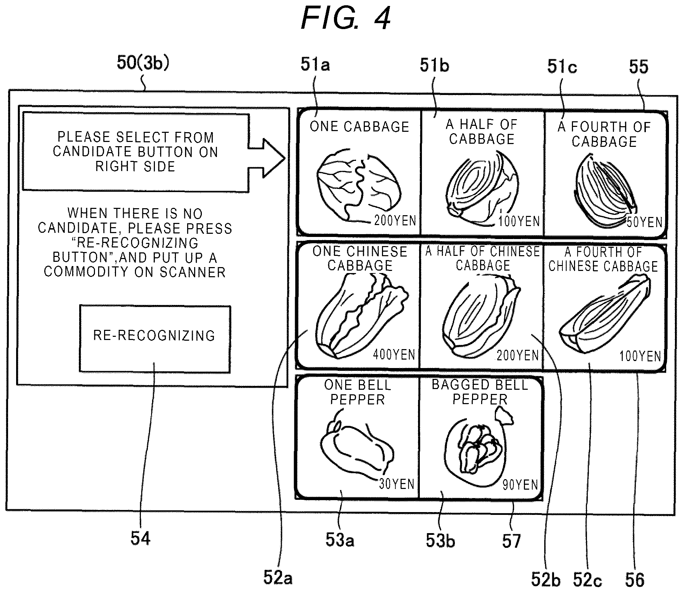

FIG. 4 depicts an example of a candidate selecting screen 50.

On the candidate selecting screen 50, the option display unit 42 displays candidate commodities classified by type and size. Here, the "size" may mean a half, or a fourth of a same one commodity, or a combined number of one commodity in a bag or a package, or a difference in size or weight of one commodity.

The candidate selecting screen 50 includes selecting buttons 51a, 51b, 51c, 52a, 52b, 52c, 53a, and 53b which display a plurality of candidate commodities so as to be selected, a re-recognizing button 54, and thick frames 55, 56, and 57 which denote a classification. The re-recognizing button 54 is a button which is pressed when there is no commodity corresponding to the selecting buttons 51a to 53b. When the re-recognizing button 54 is pressed, the process returns to a reading step using the scanner 4, by clearing candidate commodity.

The selecting buttons 51a to 53b are arranged on the candidate selecting screen 50 in the order of high similarity from above. In the example illustrated in FIG. 4, a candidate having the highest similarity to a commodity which is put up on the reading window 4a is a cabbage, a candidate having the second highest similarity is a Chinese cabbage, and a candidate having the third highest similarity is a bell pepper.

In a store in this example, a cabbage and a Chinese cabbage are sold in various sizes such as a while, a half, and a quarter. Bell peppers are sold individually and several packed in a bag. Each of the thick frames 55 to 57 in the candidate selecting screen 50 denotes a same commodity in different sizes. For example, the selecting button 51a for a whole cabbage, the selecting button 51b for a half of a cabbage, and the selecting button 51c of a quarter of are cabbage are disposed side by side in a line, and are surrounded with the thick frame 55. The selecting buttons 52a to 52c for a Chinese cabbage and the selecting buttons 53a and 53b for a bell pepper are arranged similarly.

The operation reception unit 43 is a functional unit which receives various instructions from a customer operating the self-service checkout POS 1 through the touch panel 3a, the scanner 4 and the hand scanner 5. The instructions include, for example, a selection of one of the candidate displayed on the option display unit 42 as a commodity being purchased. When the option display unit 42 displays a single candidate commodity, the instruction include a confirmation of the candidate commodity is determined (acknowledged) as a commodity being purchased. The instructions also include an instruction to start over the step of reading without selecting any one of the candidate commodities as a commodity being purchased.

The operation reception unit 43 reads a commodity code corresponding to a commodity to be purchased by a customer from the PLU file when a customer presses an input button corresponding to the commodity.

The sales registration unit 46 performs a sales registration with respect to commodity information of total commodities being purchased by a customer, and calculates a total amount due. The total commodities include a commodity which a customer has selected via the operation reception unit 43 from the candidate commodities on the option display unit 42, and a commodity of which a code symbol such as a barcode has been read.

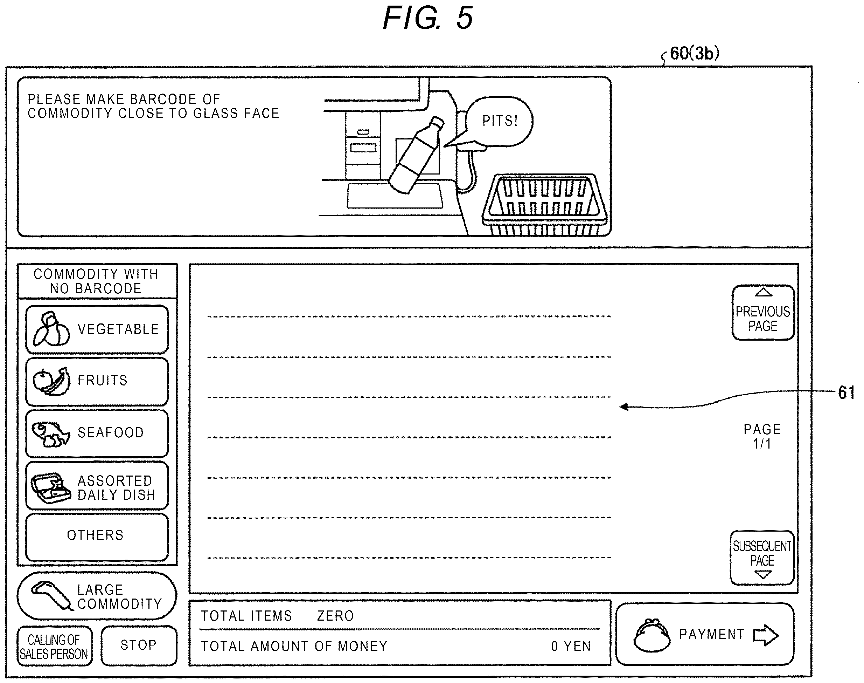

The list display unit 45, in cooperation with the display control unit 48, displays a list of commodity information which is subjected to a sales registration by the sales registration unit 46 on the registration screen on the display 3b. Here, FIG. 5 depicts an example list 61 on a registration screen 60.

The informing unit 44 issues an alert (also referred to as a warning or an alarm) in a predetermined event or situation. The alert is, for example, a predetermined image displayed on a predetermined display device, or predetermined sound. The predetermined event or situation is, for example, when among a plurality of candidate commodities denoted by the option display unit 42, a candidate commodity having a similarity that is not the highest is selected as a commodity being purchased by a customer in the operation reception unit 43. The predetermined display device is for example, the display 33 of the store server 30, or the display 3b of the self-service checkout POS 1.

With increased accuracy in object recognition in recent years, a candidate commodity not having the highest similarity is unlikely to be elected due to an error in object recognition. Thus, when a candidate commodity not having the highest similarity is selected, there is a probability of errors in the registration processing.

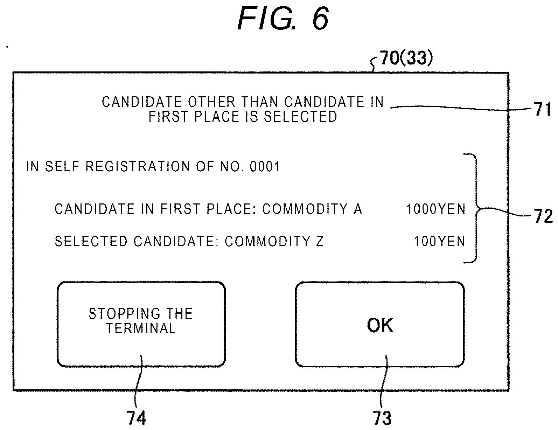

The informing unit 44 issues an alert on the display 33 of the store server 30, which is a terminal device operated by a sales person. FIG. 6 depicts an example alert screen 70 displayed on the display 33.

The alert screen 70 includes, for example, a message 71, a note 72, an OK button 73, and a terminal stop button 74. The message 71 is, for example, "an unexpected item is selected.". The note 72 is a note for denoting a detail of alarm contents, for example. The note 72 may be omitted. The OK button 73 receives an instruction of closing the alert screen 70. The terminal stop button 74 receives an instruction of stopping the display of the alert.

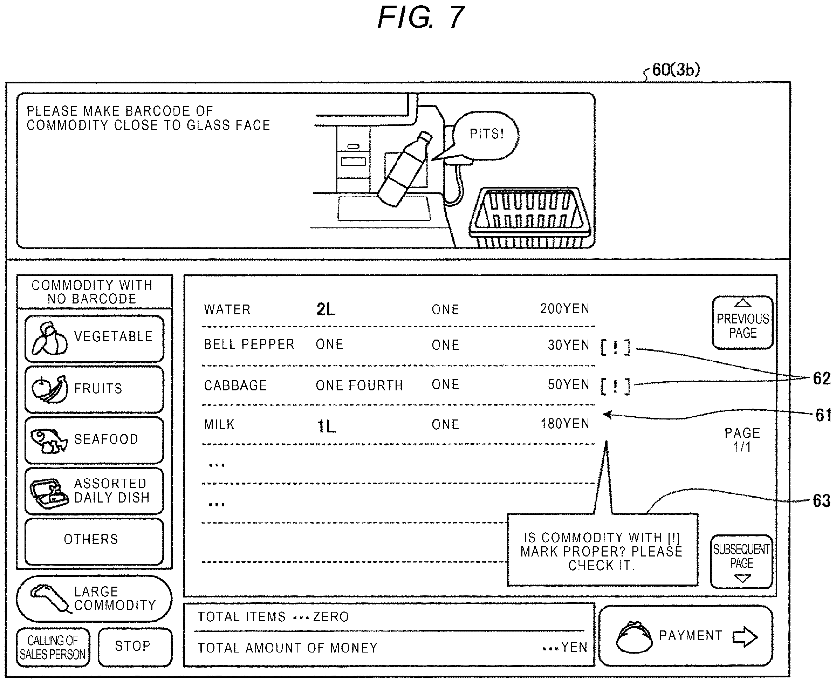

The informing unit 44 issues an alert on the registration screen 60 of the self-service checkout POS 1. FIG. 7 depicts example alerts 62 and 63 which are displayed on the registration screen 60.

The alert 62 on the registration screen 60 may be a mark such as a character, sign, badge, or the like in the vicinity of the selected commodity in the list 61. The alert 63 explains the reason for displaying the mark to a customer.

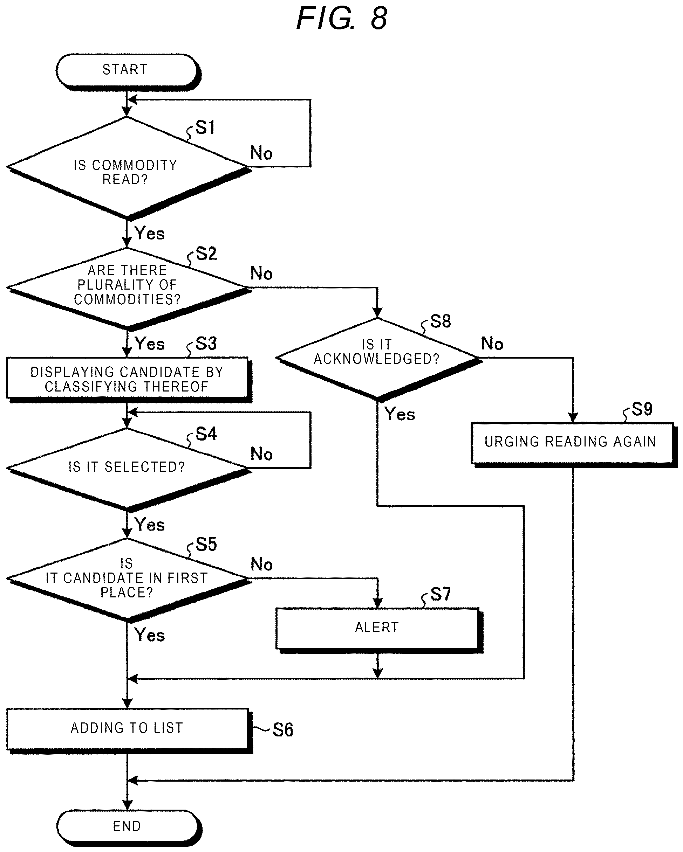

The control unit 21 informs there is a possibility of misregistration (referred to as a misregistration informing processing). FIG. 8 is a flowchart of an example flow of misregistartion informing processing by the control unit 21.

The control unit 21 waits for an output of the fetching unit 40 (No in ACT 1). The fetching unit 40 obtains an image captured by the imaging unit, when a commodity is put up on the reading window 4a (Yes in ACT 1).

When there is an output from the fetching unit 40, the similarity calculating unit 41 performs object recognizing processing, and calculating and comparing of feature data, and outputs one or more candidate commodities. The option display unit 42 determines whether or not more than one output candidate commodities (ACT 2). When there are more than one candidate commodities (Yes in ACT 2), the option display unit 42 classifies the candidate commodities by type, size, or the like, and displays the candidate commodities on the candidate selecting screen 50 (ACT 3).

The operation reception unit 43 waits for an instruction by pressing of the selecting buttons 51a to 53b (No in ACT 4), and proceeds the processing to the subsequent ACT 5 when receiving the instruction (Yes in ACT 4).

In ACT 5, the control unit 21 determines whether or not the selected candidate commodity is the candidate commodity having the highest similarity, and when the selected candidate commodity is the candidate commodity having the highest similarity (Yes in ACT 5), the control unit causes the selected candidate commodity to be displayed on the list 61 of the registration screen 60 (ACT 6), and ends the processing.

In ACT 5, when the selected candidate commodity is not the candidate commodity having the highest similarity (No in ACT 5), the informing unit 44 issues an alert (ACT 7), and the control unit 21 proceeds the processing to ACT 6.

In ACT 2, when there is a single candidate commodity (No in ACT 2), and when the operation reception unit 43 receives an instruction from a customer for confirming the candidate commodity as a commodity being purchased (Yes in ACT 8), the control unit 21 proceeds the processing to ACT 6. In ACT 8, when the confirmation from a customer is not received (No in ACT 8), the control unit 21 prompts the customer for an instruction (ACT 9).

In this manner, when a candidate commodity not having the highest similarity is selected, since it is possible to inform a sales person, or a customer of such possible registration errors in selecting a candidate commodity that corresponds to the actual commodity, an occurrence of registration errors may be reduced.

In the related art, an error in which a commodity different from the actual commodity is registered is detected based on a weight measured by a scale or the like on the commodity placing tables 6 and 7. However, according to the example embodiments described above, it is possible to improve an accuracy in detecting such errors in combination with a weight measurement in the related art together, or it is possible to reduce a cost by omitting a scale.

In the example embodiments described above, when one commodity information is selected in the similarity calculating unit 41, the commodity is displayed as single candidate commodity, and an acknowledging operation of a customer is prompted. However, an acknowledging operation is not limited to this example, and for example, when one commodity information selected by the similarity calculating unit 41, the single candidate commodity may be determined as a commodity being purchased without an acknowledging operation by a customer.

In the example embodiments described above, an alert is issued when a candidate commodity not having a highest similarity is selected. However, an alert issuance is not limited to this example. For example, when there is a plurality of candidate commodities not having the highest similarity, the informing unit 44 may issue an alert only when a price of a selected candidate commodity has a lowest price among the plurality of candidate commodities. In this manner, it is possible to avoid issuing unnecessary alerts.

### Second embodiment

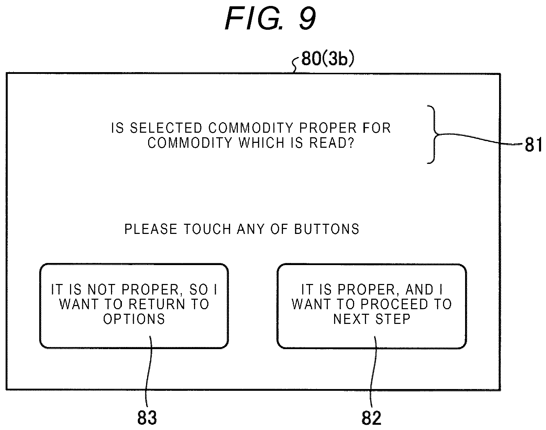

FIG. 9 depicts another example alert on the display 3b of the self-service checkout POS 1. In the modification example, an alert screen 80 is displayed every time a commodity that may be different from the actual commodity is registered. The alert screen 80 includes a message 81, and buttons 82 and 83. The message 81 is a message which asks a customer operating the self-service checkout POS 1 such as "Is this an item you scanned?". The button 82 is a button for the customer to confirm that "Yes, please proceed to a next item", for example, and receives an instruction for moving to the subsequent step. The button 83 is a button for the customer to indicate that "No, please return to options, " for example, and receives an instruction for returning to the previous step.

In the example embodiments described above, the program which is executed in the commodity information reading device is stored in the ROM, or the like in advance.

The program which is executed in the commodity information reading device may be recorded in a computer-readable recording medium such as a CD-ROM, a flexible disk (FD), a CD-R, or a digital versatile disk (DVD).

The program which is executed in the commodity information reading device may be stored in a computer which is connected to a network such as the Internet, and be downloaded through the network. The program which is executed in the commodity information reading device may be provided or distributed through a network such as the Internet.

The program which is executed in the commodity information reading device may be formed in a module configuration which includes the above described each unit (fetching unit 40, similarity calculating unit 41, option display unit 42, operation reception unit 43, informing unit 44, list display unit 45, sales registration unit 46, printing control unit 47, display control unit 48, and commodity reading unit 49). The processor downloads the above described each unit to a main storage device, by reading the program from the above described storage medium, and executing the program. In this manner, the fetching unit 40, the similarity calculating unit 41, the option display unit 42, the operation reception unit 43, the informing unit 44, the list display unit 45, the sales registration unit 46, the printing control unit 47, the display control unit 48, and the commodity reading unit 49 are generated in the main storage device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A commodity information reading device, comprising:
an imaging device;
a display device; and
a controller configured to:
acquire an image of a commodity from an imaging device;
calculate feature data of the commodity from the image;
calculate a similarity value for the commodity using the calculated feature data and pre-registered feature data for a plurality of pre-registered commodities;
cause commodity information of each pre-registered commodity that has a similarity value higher than a predetermined threshold value to be displayed as one candidate commodity in a plurality of candidate commodities on the display device;
receive a selection designating one of the plurality of candidate commodities as a purchased commodity; and
issue an alert when the designated candidate commodity does not have the highest similarity value from among the plurality of candidate commodities.

2. The device according to claim 1, wherein the selection designating one of the plurality of candidate commodities as the purchased commodity is received from a user input unit.

3. The device according to claim 1 or 2, wherein if only one pre-registered commodity has a similarity value higher than the predetermined threshold value, the controller automatically designates the one pre-registered commodity as the purchased commodity.

4. The device according to any of claims 1 to 3, wherein the controller is further configured to issue an alert when the designated candidate commodity has a lowest price from among the plurality of candidate commodities.

5. The device according to any of claims 1 to 4, wherein the controller is further configured to:
cause the designated candidate commodity to be displayed in a list on the display device; and
cause a mark to be displayed in vicinity of the designated candidate commodity in the list on the display device.

6. The device according to any of claims 1 to 5, wherein the controller is further configured to issue an alert to an external terminal device connected to commodity information reading device.

7. The device according to any of claims 1 to 6, wherein when none of the pre-registered commodities have a similarity value higher than the pre-determined threshold value, the controller causes the pre-registered commodity with the highest similarity value among the plurality of pre-registered commodities to be displayed on the display device.

8. A self-service checkout Point-of-Sale (POS) terminal comprising:
an imaging device to capture an image of a commodity;
a display device;
a touch panel; and
a controller configured to:
acquire an image of a commodity from the imaging device;
calculate feature data of the commodity from the image;
calculate a similarity value for the commodity using the calculated feature data and pre-registered feature data for a plurality of pre-registered commodities;
cause commodity information of each pre-registered commodity that has a similarity value higher than a predetermined threshold value to be displayed as one candidate commodity in a plurality of candidate commodities on a display device;
receive a selection designating one of the plurality of candidate commodities as a purchased commodity; and
issue an alert when the designated candidate commodity does not have the highest similarity value from among the plurality of candidate commodities.

9. The self-service checkout Point-of-Sale (POS) terminal according to claim 8, wherein if only one pre-registered commodity has a similarity value higher than the predetermined threshold value, the controller automatically designates the one pre-registered commodity as the purchased commodity.

10. The self-service checkout Point-of-Sale (POS) terminal according to claim 8 or 9, wherein the controller is further configured to:
cause the designated candidate commodity to be displayed in a list on the display device; and
a mark to be displayed in vicinity of the designated candidate commodity in the list on the display device.

11. The self-service checkout Point-of-Sale (POS) terminal according to any of claims 8 to 10, wherein the controller is further configured to issue an alert to an external terminal device connected to commodity information reading device.

12. The self-service checkout Point-of-Sale (POS) terminal according to any of claims 8 to 11, wherein when none of the pre-registered commodities have a similarity value higher than the pre-determined threshold value, the controller causes the pre-registered commodity with the highest similarity value among the plurality of pre-registered commodities to be displayed on the display device.

13. A commodity information reading method comprising:
acquiring an image of a commodity from an imaging device;
calculating feature data of the commodity from the image
calculating a similarity value for the commodity using the calculated feature data and pre-registered feature data for a plurality of pre-registered commodities;
causing commodity information of each pre-registered commodity that has a similarity value higher than a predetermined threshold value to be displayed as one candidate commodity in a plurality of candidate commodities on a display device ;
receiving a selection designating one of the plurality of candidate commodities as a purchased commodity; and
issuing an alert when the designated candidate commodity does not have the highest similarity value from among the plurality of candidate commodities.

14. The commodity information reading method according to claim 13, further comprising:
when only one pre-registered commodity has a similarity value higher than the predetermined threshold value, automatically designating the one pre-registered commodity as the purchased commodity.

15. The commodity information reading method according to claim 13 or 14, further comprising:
issuing an alert when the designated candidate commodity has a lowest price from among the plurality of candidate commodities.
